# EUROPÄISCHE PATENTSCHRIFT

(11) **EP 0 536 230 B1**
(45) Veröffentlichungstag und Bekanntmachung des Hinweises auf die Patenterteilung: **02.11.1994**
(21) Anmeldenummer: 91911929.7
(22) Anmeldetag: 29.06.1991
(51) Int. Cl.: F16H 3/78, F16H 37/04

(54) **BEREICHSGETRIEBE FÜR KRAFTFAHRZEUGE**
RANGE CHANGE GEARBOX FOR VEHICLES
BOITE-RELAIS POUR VEHICULES A MOTEUR

(30) Priorität: 03.07.1990 DE 4021170
(43) Veröffentlichungstag der Anmeldung: 14.04.1993
(73) Patentinhaber: ZAHNRADFABRIK FRIEDRICHSHAFEN AG, 88015 Friedrichshafen (DE)
(72) Erfinder: BURI, Gerhard, D-7990 Friedrichshafen 5 (DE); BADER, Josef, D-7990 Friedrichshafen 1 (DE)
(86) Internationale Anmeldenummer: EP9101218
(87) Internationale Veröffentlichungsnummer: WO9201173

(56) Entgegenhaltungen:
- DE-A- 2 530 545
- FR-A- 907 349
- FR-A- 2 556 067
- US-A- 4 182 202
- LOOMAN "ZAHNRADGETRIEBE" BERLIN 1970, S. 184

## Beschreibung

Die Erfindung bezieht sich auf ein Bereichsgetriebe für Kraftfahrzeuge, das ausgebildet ist als Planetengetriebe mit einem drehfest auf einer Ausgangswelle eines Grundgetriebes angeordneten Sonnenrad, einem drehfest mit einer Abtriebswelle des Bereichsgetriebes verbundenen Steg und einem Hohlrad, welches über eine konzentrisch zur Ausgangs- oder Abtriebswelle angeordnete Schaltkupplung in einer ins Langsame übersetzten Schaltstufe des Bereichsgetriebes mit einem Getriebegehäuse und in einem direkten Durchtrieb mit einem Antriebs- oder Abtriebsglied verbindbar ist, wobei die Schaltkupplung eine Synchronisiereinrichtung sowie eine axial verschiebbare Schiebemuffe aufweist, deren Verzahnung in zwei axialen Endstellungen der Schiebemuffe jeweils mit einer Kuppelverzahnung am Getriebegehäuse oder am An- bzw. Abtriebsglied in Eingriff bringbar ist.

Ein Bereichsgetriebe der genannten Gattung ist bekannt aus der DE-A-33 20 431. Dabei weist die Schaltkupplung eine Synchronisiereinrichtung mit zwei Synchronringen auf, von denen jeweils ein Synchronring mit einer Kegelfläche am Getriebegehäuse und mit einer Kegelfläche an einem mit der Ausgangswelle drehfesten Kupplungsring zusammenwirkt.

Ebenfalls ist aus der FR-A-2 556 067 ein Bereichsgetriebe für Motorfahrzeuge mit einem Planetengetriebe bekannt. Dabei ist das Sonnenrad des Planetengetriebes mit der Ausgangswelle des Grundgetriebes verbunden und steht mit Planetenrädern im Eingriff, die von einem Planetenradträger getragen werden, der mit der Abtriebswelle verbunden ist. Die Planetenräder stehen ebenfalls mit dem Hohlrad des Planetengetriebes in Eingriff. Das Hohlrad ist drehfest mit einer Schiebemuffe gekuppelt, die als Träger des Hohlrades dient. Durch axiale Verschiebung der Schiebemuffe kann das Hohlrad entweder gegen Drehung relativ zum Gehäuse verriegelt werden, um einen Untersetzungsantrieb zwischen Ausgangs- und Abtriebswelle einzurichten, oder das Hohlrad kann gegen eine Drehung relativ zu Ausgangs- und Abtriebswelle verriegelt werden, um einen Direktantrieb zischen den Wellen einzurichten.

Der Erfindung liegt die Aufgabe zugrunde, den Fertigungsaufwand für eine an einem gattungsgemäßen Bereichsgetriebe verwendete Synchronisiereinrichtung zu verringern.

Diese Aufgabe wird nach dem kennzeichnenden Teil des Anspruchs 1 dadurch gelöst, daß die Synchronisiereinrichtung einen einteiligen Synchronring aufweist, der mit seinen beiden Reibflächen mit am Getriebegehäuse und am An- bzw. Abtriebsglied angeordneten Kegelflächen zusammenwirkt. Die Kegelflächen, die einen stumpfen Winkel einschließen, weisen außerdem einen geringfügigen axialen Abstand zueinander auf. Der einteilige Synchronring ist dabei mit zwei Reibflächen versehen, die parallel zu den Kegelflächen verlaufen. Für die Herstellung eines derartigen Synchronringes ist ein geringer Fertigungsaufwand erforderlich.

Weitere vorteilhafte Ausgestaltungen der Erfindung sind in den Unteransprüchen 2 bis 6 beschrieben. Gemäß Anspruch 3 sollen in zumindest einer der Kegelflächen Schmiermittel-Abflußöffnungen vorgesehen sein. Schmiermittel, das von dem Planetengetriebe aus dem Ölsumpf in den Bereich der Schiebemuffe geschleudert wird, kann auf diese Weise über den zwischen den Kegelflächen vorhandenen Spalt und die Schmiermittel-Abflußöffnungen wieder aus der Synchronisiereinrichtung abfließen.

Weiterhin kann gemäß Anspruch 4 zwischen der Schiebemuffe und dem Synchronring eine Ringfeder angeordnet sein, die bei einer Axialbewegung der Schiebemuffe den Synchronring zum Ansynchronisieren gegen die jeweilige Kegelfläche bewegt. In weiterer Ausgestaltung der Erfindung soll gemäß Anspruch 5 der als Abtriebsglied dienende Steg einen über eine Lagerung von Planetenbolzen axial vorstehenden Bund aufweisen, an dem über eine Verzahnung der Kupplungskörper drehfest angeordnet ist. Auf diese Weise läßt sich der Kupplungskörper, an dem auch die Kegelfläche vorgesehen ist, als austauschbares Bauteil ausbilden. Auf die gleiche Weise kann nach Anspruch 6 der dem Getriebegehäuse zugeordnete Kupplungskörper über eine Verzahnung drehfest am Getriebegehäuse geführt sein.

Zur weiteren Erläuterung der Erfindung wird auf die Zeichnung verwiesen, in der ein Ausführungsbeispiel vereinfacht dargestellt ist. Es zeigen :
- Fig. 1: einen Längsschnitt durch ein Bereichsgetriebe mit einer einen einteiligen Synchronring aufweisenden Schaltkupplung;
- Fig. 2: eine Teilansicht aus Fig. 1, bei der eine Schiebemuffe der Schaltkupplung in axialer Richtung in ihre linke Endstellung verschoben ist;
- Fig. 3: eine Teilansicht aus Fig. 1, bei der die Schiebemuffe wiederum in ihre Neutralstellung bewegt ist und
- Fig. 4: eine Teilansicht aus Fig. 1, bei der die Schiebemuffe in axialer Richtung in ihre rechte Schaltstellung bewegt ist.

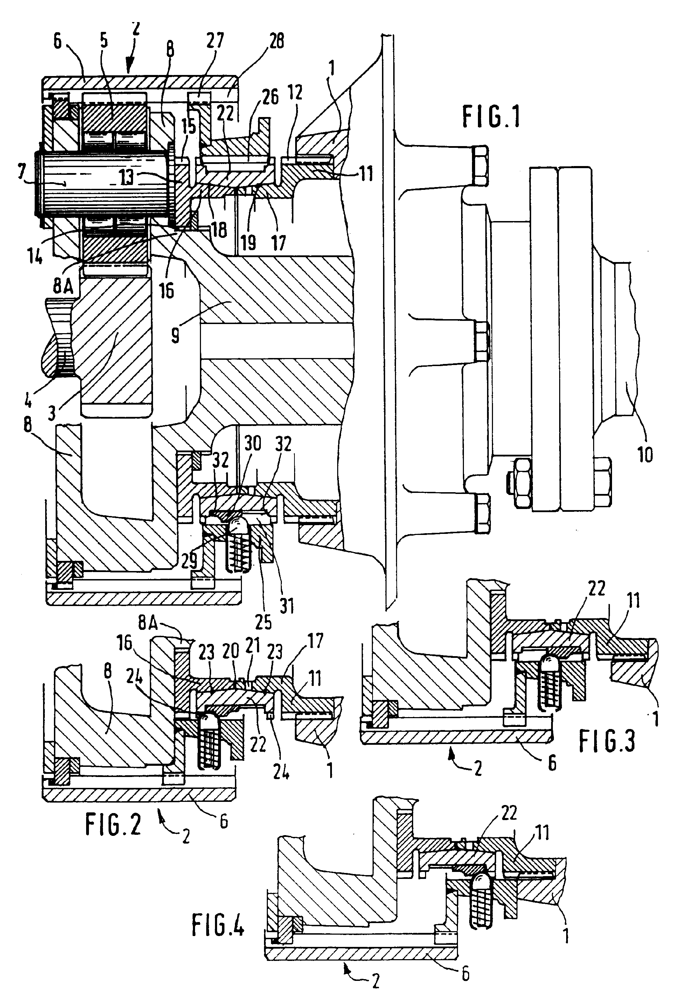

In Fig. 1 ist mit 1 ein Getriebegehäuse bezeichnet, das in seinem Inneren ein als Bereichsgetriebe dienendes Planetengetriebe 2 aufnimmt. Das Planetengetriebe 2 weist eingangsseitig ein Sonnenrad 3 auf, welches drehfest verbunden ist mit einer Ausgangswelle 4 eines nicht dargestellten Grundgetriebes. Weitere Bauelemente des Planetengetriebes 2 sind Planetenräder 5, von denen in der Darstellung nur eines sichtbar ist, und ein Hohlrad 6. Die Planetenräder 5, die sich sowohl mit dem Sonnenrad 3 als auch mit dem Hohlrad 6 im Eingriff befinden, sind über Planetenbolzen 7 in einem Steg 8 gelagert. Der Steg 8 wiederum ist drehfest verbunden mit einer Abtriebswelle 9 des Bereichsgetriebes, welche aus dem Getriebegehäuse 1 herausgeführt und über eine Kardanwelle 10 mit einer nicht näher dargestellten Antriebsachse des Kraftfahrzeugs verbunden ist.

Am Getriebegehäuse 1 ist ein ringförmiger Kupplungskörper 11 befestigt, wobei er eine Kuppelverzahnung 12 aufweist, über die er auch drehfest im Getriebegehäuse 1 geführt ist. Am Steg 8 ist ein zweiter Kupplungskörper 13 befestigt, der eine Innenverzahnung 14 und eine äußere Kuppelverzahnung 15 aufweist. Mittels seiner Innenverzahnung 14 ist der zweite Kupplungskörper 13 drehfest auf einem axial vorstehenden Bund 8A des Stegs 8 angeordnet.

Beide Kupplungskörper 11 und 13 haben in axiale Richtung weisende, koaxial zur Abtriebswelle 9 verlaufende Ansätze 16 und 17, an denen Kegelflächen 18 und 19 vorgesehen sind. Zwischen den Ansätzen 16 und 17 verläuft ein Spalt 20, und von der Kegelfläche 18 führt durch den Ansatz 16 zumindest eine Schmiermittel-Abflußöffnung 21.

Auf den Kegelflächen 18 und 19 befindet sich ein einstückig ausgebildeter Synchronring 22, der parallel zu den Kegelflächen verlaufende Reibflächen 23 und an seinem äußeren Umfang, benachbart den beiden Kuppelverzahnungen 12 und 15, Sperrverzahnungen 24 aufweist. Auf dem Synchronring 22 ist eine Schiebemuffe 25 fliegend gelagert, die eine innere Kuppelverzahnung 26 aufweist und außerdem über eine Außenverzahnung 27 drehfest in einer Verzahnung 28 des Hohlrades 6 geführt ist. Die Schiebemuffe 25, die über eine nicht näher dargestellte Schaltgabel aus ihrer in Fig. 1 dargestellten Neutralstellung in Schaltstellungen verschoben werden kann, weist radiale Druckbolzen 29 auf, die in Richtung des Synchronringes 22 federbelastet sind. Diese Druckbolzen wirken mit rampenartigen Druckstücken 30 zusammen, die in einer am äußeren Umfang des Synchronringes 22 vorgesehenen Ausnehmung 31 vorgesehen sind. In axialer Richtung ist dabei die Ausnehmung durch stirnseitige Anlaufflächen 32 begrenzt.

Befindet sich die Schiebemuffe 25 in ihrer rechten Stellung, so ist das Hohlrad 6 über die Schiebemuffe 25 und den Kupplungskörper 11 drehfest mit dem Getriebegehäuse verbunden, wodurch das Bereichsgetriebe sich in einer ins Langsame übersetzten Stellung befindet. Wird die Schiebemuffe 25 durch eine Axialverschiebung in ihre linke Schaltstellung bewegt, so verbindet sie den Steg 8 über den zweiten Kupplungskörper 13 mit dem Hohlrad 6, wodurch ein direkter Durchtrieb des Bereichsgetriebes zustande kommt. Für das Bereichsgetriebe bestehen nur diese beiden Schaltstellungen, deren Funktion nachfolgend nochmals anhand der Fig. 1 bis 4 erläutert werden: In der Fig. 1 wird die Schiebemuffe 25 aus der ins Langsame übersetzten Schaltstellung des Bereichsgetriebes heraus nach links verschoben, wobei die Druckbolzen 29 in Anlage sind an den Druckstücken 30, die innerhalb der Ausnehmung 31 verschoben werden und schließlich zur Anlage kommen an der stirnseitigen Anlagefläche 32, wodurch eine Axialkraft auf den einstückigen Synchronring 22 ausgeübt wird, der eine Reibwirkung zwischen dessen Reibfläche 23 und der Kegelfläche 18 herbeiführt. Bei einer weiteren Axialbewegung der Schiebemuffe 25 wird deren innere Kuppelverzahnung 26 durch die Sperrverzahnung 24 des Synchronrings 22 hindurchgeführt und kuppelt ein an der Kuppelverzahnung 15. Diese Lage der Schiebemuffe 25 ist in Fig. 2 dargestellt.

Soll nun, wie in Fig. 3 dargestellt, die Schiebemuffe 25 aus dieser Schaltstellung heraus wieder in die ins Langsame übersetzte Stellung des Bereichsgetriebes verschoben werden, so nimmt zunächst der Druckbolzen 29 das Druckstück 30 innerhalb der Ausnehmung 31 mit, bis dieses zur Anlage gelangt an der gegenüberliegenden stirnseitigen Anlagefläche 32. Da der federbelastete Druckbolzen 29 an der schiefen Ebene des jeweiligen Druckstückes 30 entlangbewegt wird, nimmt wiederum die auf den Synchronring 22 übertragene Axialkraft zu. Dadurch wird wieder ein Reibmoment zwischen dem Synchronring 22 und der Kegelfläche 19 wirksam. Ist das Hohlrad über den Synchronring 22 völlig abgebremst, so läßt die Sperrwirkung der Sperrverzahnung 24 nach, und die Schiebemuffe 25 gelangt mit ihrer inneren Kuppelverzahnung 26 in Eingriff an der Kuppelverzahnung 12 des Kupplungskörpers 11. In dieser Stellung hat wiederum der Druckbolzen 29 das rampenartige Druckstück 30 überfahren.

Anstelle der Verwendung der federbelasteten Druckbolzen 29 und der rampenartigen Druckstücke 30 besteht auch die Möglichkeit, innerhalb der Ausnehmung 31 Ringfedern vorzusehen, die mit an der Schiebemuffe angeordneten schiefen Ebenen zusammenwirken.

### Bezugszeichen

- 1: Getriebegehäuse
- 2: Planetengetriebe
- 3: Sonnenrad
- 4: Ausgangswelle
- 5: Planetenräder
- 6: Hohlrad
- 7: Planetenbolzen
- 8: Steg
- 8A: axialer Bund
- 9: Abtriebswelle
- 10: Kardanwelle
- 11: Kupplungskörper
- 12: Kuppelverzahnung
- 13: zweiter Kupplungskörper
- 14: Innenverzahnung
- 15: äußere Kuppelverzahnung
- 16: Ansatz
- 17: Ansatz
- 18: Kegelfläche
- 19: Kegelfläche
- 20: Spalt
- 21: Schmiermittel-Abflußöffnung
- 22: Synchronring
- 23: Reibfläche
- 24: Sperrverzahnung
- 25: Schiebemuffe
- 26: innere Kuppelverzahnung
- 27: Außenverzahnung
- 28: Verzahnung von 6
- 29: Druckbolzen
- 30: Druckstücke
- 31: Ausnehmung
- 32: stirnseitige Anlageflächen

## Patentansprüche

1. Bereichsgetriebe für Kraftfahrzeuge, das ausgebildet ist als Planetengetriebe (2) mit einem drehfest auf einer Ausgangswelle (4) eines Grundgetriebes angeordneten Sonnenrad (3), einem drehfest mit einer Abtriebswelle (9) des Bereichsgetriebes verbundenen Steg (8) und einem Hohlrad (6), welches über eine konzentrisch zur Ausgangs- oder Abtriebswelle (9) angeordnete Schaltkupplung in einer ins Langsame übersetzten Schaltstufe des Bereichsgetriebes mit einem Getriebegehäuse (1) und in einem direkten Durchtrieb mit einem Antriebs- (Ausgangswelle 4) oder Abtriebsglied (Steg 8) verbindbar ist, wobei die Schaltkupplung eine Synchronisiereinrichtung sowie eine axial verschiebbare Schiebemuffe (25) aufweist, deren Verzahnung (26) in zwei axialen Endstellungen der Schiebemuffe (25) jeweils mit einer Kuppelverzahnung (12 bzw. 15) am Getriebegehäuse (1) oder am An- bzw. Abtriebsglied (4 bzw. 8) in Eingriff bringbar ist, dadurch **gekennzeichnet**, daß die Synchronisiereinrichtung einen einteiligen Synchronring (22) aufweist, der mit seinen beiden Reibflächen (23) mit am Getriebegehäuse (1) und am An- bzw. Abtriebsglied (4 bzw. 8) angeordneten Kegelflächen (18 und 19) zusammenwirkt, daß in der Schiebemuffe (25) radiale in Richtung des Synchronrings (22) federbelastete Druckbolzen (29) angeordnet sind, daß in einer im Querschnitt gesehenen U-förmigen Ausnehmung (31) am Außenumfang des Synchronringes rampenartige Druckstücke (30) axial verschiebbar angeordnet sind, und daß die Druckbolzen (29) in beiden Bewegungsrichtungen der Schiebemuffe (25) über die Druckstücke (30) eine Axialkraft auf den Synchronring (22) ausüben.

2. Bereichsgetriebe für Kraftfahrzeuge nach Anspruch 1, dadurch **gekennzeichnet**, daß in der Schiebemuffe (25) radiale, in Richtung des Synchronrings (22) federbelastete Druckbolzen (29) angeordnet sind, daß in einer im Querschnitt gesehen U-förmigen Ausnehmung (31) am Außenumfang des Synchronringes (22) jeweils beidseitig einer Quermittelebene der Schiebemuffe rampenartige Druckstücke (30) angeordnet sind, und daß die Druckbolzen (29) in beiden Bewegungsrichtungen der Schiebemuffe (25) über die beidseitig angeordneten Druckstücke (30) eine Axialkraft auf den Synchronring (22) ausüben.

3. Bereichsgetriebe für Kraftfahrzeuge nach Anspruch 1, dadurch **gekennzeichnet**, daß in zumindest einer der Kegelflächen (18, 19) Schmiermittel-Abflußöffnungen (21) vorgesehen sind.

4. Bereichsgetriebe für Kraftfahrzeuge nach Anspruch 1, dadurch **gekennzeichnet**, daß zwischen der Schiebemuffe (25) und dem Synchronring (22) innerhalb einer Ausnehmung (31) des Synchronrings (22) eine Ringfeder angeordnet ist.

5. Bereichsgetriebe für Kraftfahrzeuge nach Anspruch 1, dadurch **gekennzeichnet**, daß der als Abtriebsglied dienende Steg (8) einen über eine Lagerung von Planetenbolzen axial vorstehenden Bund aufweist, an dem über eine Innenverzahnung (14) der Kupplungskörper (13) drehfest angeordnet ist.

6. Bereichsgetriebe für Kraftfahrzeuge nach Anspruch 1, dadurch **gekennzeichnet**, daß der Kupplungskörper (11) über eine Verzahnung, die in ihrer Verlängerung mit der inneren Kuppelverzahnung (26) der Schiebemuffe (25) kuppelbar ist, drehfest am Getriebegehäuse (1) geführt ist.

## Claims

1. In a range-change group for motor vehicles of the planetary gear (2) design with a sun gear (3) in a rotationally fixed arrangement on an output shaft (4) of a main gearbox, a planet carrier (8) in a rotationally fixed arrangement on an output shaft (9) of the range-change gearbox, and a ring gear (6) which can be connected to a gearbox housing (1) and, by direct drive, to an input element (output shaft 4) or output element (planet carrier 8) via a clutch arranged concentrically to the output shaft (9) in a range-change gearbox ratio giving a low drive range, the clutch has a synchronizer device and a sliding sleeve (25) which can be displaced axially and the profile teeth (26) of which can be brought into mesh with a coupling tooth profile (12 or 15) on the gearbox housing (1) or input or output element (4 or 8) in two axial end stop positions of the sliding sleeve (25), **characterized** in that,
the synchronizer device has a single-piece synchronizer ring (22), the two friction faces (23) of which act in conjunction with bevel faces (18 and 19) arranged on the gearbox housing (1) or input or output element (4 or 8), that radial, spring-loaded pressure pins (29) are arranged in sliding sleeve (25) in the direction of the synchronizer ring (22), that wedge-shaped pressure pieces (30) are located in an axially displaceable arrangement within a notch (31) with a U-shaped cross-section made into the outer edge of the synchronizer ring (22), and that the pressure pins (29) exert an axial force on the synchronizer ring (22) in both directions of movement of the sliding sleeve (25) by means of the pressure pieces (30).

2. Range-change gearbox for motor vehicles in accordance with Claim 1, **characterized** in that,
radial, spring-loaded pressure pins (29) are arranged in sliding sleeve (25) in the direction of the synchronizer ring (22), that wedge-shaped pressure pieces (30) are located one on either side of a mean transverse level of the sliding sleeve within a notch (31) with a U-shaped cross-section made into the outer edge of the synchronizer ring (22), and that the pressure pins (29) exert an axial force on the synchronizer ring (22) in both directions of movement of the sliding sleeve (25) by means of the pressure pieces (30) on either side.

3. Range-change gearbox for motor vehicles in accordance with Claim 1, **characterized** in that,
lubricant evacuation apertures (21) are provided in at least one of the bevel faces (18, 19).

4. Range-change gearbox for motor vehicles in accordance with Claim 1, **characterized** in that,
a coil spring is fitted in a notch (31) in the synchronizer ring (22) between the sliding sleeve (25) and the synchronizer ring (22).

5. Range-change gearbox for motor vehicles in accordance with Claim 1, **characterized** in that,
the planet carrier (8) which serves as an output element has a collar projecting beyond a planetary pin bearing and the clutch body (13) is located on the collar in a fixed arrangement by means of an internal tooth profile (14).

6. Range-change gearbox for motor vehicles in accordance with Claim 1, **characterized** in that,
the clutch body (11) is located on the gearbox housing (1) in a fixed arrangement by means of a tooth profile which, when extended, can be connected with the internal profile teeth (26) of the sliding sleeve (25).

## Revendications

1. Boîte-relais pour véhicules à moteur, agencée en engrenage planétaire (2) comportant un pignon planétaire (3) fixé en rotation sur un arbre de sortie (4) d'une boîte de vitesses de base, un porte-satellites (8) lié en rotation à un arbre de sortie (9) de la boîte-relais, et une couronne à denture intérieure (6) qui, au moyen d'un embrayage de commutation disposé concentriquement par rapport à l'arbre de sortie (9), peut être couplée à un carter de boîte (1), pour un rapport de démultiplication de la boîte-relais, et à un élément entraîneur (arbre de sortie 4) ou entraîné (porte-satellites 8) pour une prise directe, l'embrayage de commutation comportant un dispositif de synchronisation et un manchon baladeur (25) coulissant axialement, dont une denture (26), dans deux positions de fin de course du manchon baladeur (25), s'engrène dans une denture de couplage (12 ou 15) prévue respectivement sur le carter (1) ou sur l'élément entraîneur ou entraîné (4 ou 8), **caractérisée** en ce que le dispositif de synchronisation comporte une bague de synchronisation (22) en une pièce qui coopère par ses deux surfaces de friction (23) avec des surfaces coniques (18 et 19) disposées sur le carter (1) et sur l'élément entraîneur ou entraîné (4 ou 8), en ce que des goujons radiaux de poussée (29) sont montés dans le manchon baladeur (25) et sont chargés par des ressorts en direction de la bague de synchronisation (22), en ce que des poussoirs (30) à profil en rampe sont disposés de manière à coulisser axialement dans un évidement (31) à section transversale en forme de U ménagé sur le pourtour extérieur de la bague de synchronisation, et en ce que les goujons de poussée (29) exercent une force axiale sur la bague de synchronisation (22) par l'entremise des poussoirs (30) dans les deux sens de déplacement du manchon baladeur (25).

2. Boîte-relais pour véhicules à moteur selon la revendication 1, **caractérisée** en ce que des goujons radiaux de poussée (29) sont montés dans le manchon baladeur (25) et sont chargés par des ressorts en direction de la bague de synchronisation (22), en ce que des poussoirs (30) à profil en rampe sont disposés des deux côtés d'un plan transversal médian du manchon baladeur dans un évidement (31) à section transversale en forme de U ménagé sur le pourtour extérieur de la bague de synchronisation (22), et en ce que les goujons de poussée (29) exercent une force axiale sur la bague de synchronisation (22) par l'entremise des poussoirs (30) disposés des deux côtés, dans les deux sens de déplacement du manchon baladeur (25).

3. Boîte-relais pour véhicules à moteur selon la revendication 1, **caractérisée** en ce que des orifices d'écoulement de lubrifiant (21) sont prévus dans au moins l'une des surfaces coniques (18, 19).

4. Boîte-relais pour véhicules à moteur selon la revendication 1, **caractérisée** en ce qu'un ressort annulaire est disposé entre le manchon baladeur (25) et la bague de synchronisation (22) dans un évidement (31) de la bague de synchronisation (22).

5. Boîte-relais pour véhicules à moteur selon la revendication 1, **caractérisée** en ce que le porte-satellites (8) servant d'élément entraîné comporte un collet qui est proéminent axialement au-delà d'une zone de support d'axes de satellites et sur lequel le corps d'embrayage (13) est fixé en rotation au moyen d'une denture intérieure (14).

6. Boîte-relais pour véhicules à moteur selon la revendication 1, **caractérisée** en ce que le corps d'embrayage (11) est bloqué en rotation sur le carter (1) au moyen d'une denture ayant un prolongement sur lequel peut se coupler la denture intérieure (26) du manchon baladeur (25).
